# EUROPÄISCHE PATENTANMELDUNG

(11) **EP 3 690 687 A1**
(43) Veröffentlichungstag der Anmeldung: **05.08.2020**
(21) Anmeldenummer: 19155394.0
(22) Anmeldetag: 04.02.2019
(51) Int. Cl.: G06F 21/35, H04L 9/32, H04L 29/06, H04W 12/00, G06F 21/32

(54) **PASSWORT- ABSTRAKTOR**

(71) Anmelder: LACKNER, Christian, 9581 Ledenitzen (AT)
(72) Erfinder: LACKNER, Christian, 9581 Ledenitzen (AT)

(57) **Zusammenfassung**

Die Erfindung betrifft ein Verfahren sowie ein dafür konzipiertes EDV-System, welche die für den Menschen in seiner Fülle und Wesensart schwer zu merkenden Codes wie beispielsweise Freischalt-, Anmelde- oder Zugangscodes für EDV-Systeme oder anderer Daten wie beispielsweise Passbilder, abstrahieren und unter ausschließlicher Zuhilfenahme von Gegenständen des täglichen Gebrauchs für EDV-Systeme oder auch menschenlesbar abrufbar machen, wobei die Komponenten des erfindungsgemäßen EDV-Systems in Systemkern (1), Lesestationen (4), Benutzer-Zugang (3), Administrator-Zugang (2) und EDV-Systeme (5), welche das erfindungsgemäße EDV-System benutzen, gegliedert sind und das erfindungsgemäße Verfahren entweder durch Einlesen eines Merkmals über eine erfindungsgemäße Lesestation (4) oder durch Anfrage eines EDV-Systems (5) gestartet wird und über die gelesene Merkmalkombination einem EDV-System (5) die zu abstrahierenden Daten EDV-technisch übermittelt.

## Beschreibung

### 1. Beschreibungseinleitung

Die Erfindung betrifft ein Verfahren sowie ein dafür konzipiertes EDV-System um spezifische Daten unter ausschließlicher Zuhilfenahme von Gegenständen des täglichen Gebrauchs zu abstrahieren.

### 2.Stand der Technik

Bekannt sind Bestimmungsverfahren für Freischalt-, Anmelde- oder Zugangscodes in verschiedenen Ausprägungen - ein paar davon können wie folgt beschrieben werden:
- Eine Zeichenfolge, die mit einem bestimmten Objekt der Natur in einem Datensatz innerhalb eines datenverarbeitenden Systems logisch miteinander verknüpft wurde. Wird eine solche Zeichenfolge von einem geeigneten Lesegerät erfasst, wird der zuvor aufgebaute zugeordnete Datensatz im datenverarbeitenden System, der das damit verknüpfte Objekt repräsentiert, assoziiert und möglicherweise eine Aktion bezüglich dieses Datensatzes ausgeführt. Beispiel: Beim Lesen der ID eines Firmenausweises wird die Zutrittsberechtigung für jene Person, die mit dieser ID einmalig verknüpft wurde, überprüft und ein Drehkreuz wird gegebenenfalls freigeschaltet.
- Ein bildgebendes Verfahren, das ein eindeutiges Muster einem datenverarbeitenden System zur Verfügung stellt, um dadurch wiederum eine Zuordnung zu einem Datensatz für ein Objekt der Natur innerhalb dieses Systems zu assoziieren. Beispiel: Scan einer Fingerkuppe, um den Fingerabdruck zu extrahieren und dadurch eine Person zu identifizieren.
- Eingabe einer Zeichenfolge über geeignete Eingabegeräte, um den Zugriff auf ein datenverarbeitendes System freizuschalten. Beispiel: Eingabe von Benutzername und Passwort zur Freigabe eines bestimmten Benutzerprofiles für die Verwendung einer Software (beispielsweise Leserechte für bestimmte Funktionen jener Software, Schreibrechte für andere Funktionen).

Die beiden verbreitetsten Verfahren benutzen eine oder zwei Eingangsgrößen:
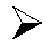 eine eindeutig einer Person zugeordnete Zeichenfolge (ID), meist vom ausgebenden EDV-System vorgegeben und elektronisch erfassbar oder
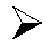 einen eindeutig einer Person oder Personengruppe zugeordneten Benutzernamen gepaart mit einer Zeichenfolge als Zugangscode, wobei zumindest der Zugangscode vom Benutzer frei definierbar ist.

Darüber hinaus gibt es spezielle EDV-Programme, die eine Vielzahl von Zugangscodes zu anderen EDV-Systemen verwalten um bei der Eingabe dieser Codes den Benutzer zu unterstützen. Der Nachteil dieses Verfahrens besteht im eingeschränkten Wirkungsbereich solcher EDV-Programme: sie beziehen sich nur auf das Umfeld eines Computers bzw. eines Benutzer-Zugangs des jeweiligen Computersystems und lassen die Zugangscodes einer Person außerhalb dieses Umfeldes (beispielsweise die Zugangscodes zu diesem verwendeten Computersystem) unberücksichtigt.

Allen gängigen Identifikationsverfahren ist gemein, dass jedes Verfahren isoliert von anderen arbeitet und meist integraler Bestandteil des jeweiligen Systems ist.

Ein weiterer Nachteil der bekannten Systeme besteht darin, dass jedes Datenverarbeitungssystem sein eigenes Code-Universum verwendet, beispielsweise RFID-Karten innerhalb eines bestimmten Nummernkreises, Barcodes, Zeichenketten oder Ähnliches.

Da die zu verwendenden EDV-Systeme in den letzten Jahren in immer weitreichendere Bereiche des Alltages vorgedrungen sind, bringt das mit sich, dass jede Person mittlerweile unzählige Codes in verschiedenen Formen für die jeweiligen Systeme verwalten muss, ohne dafür zufriedenstellende EDV-technische Unterstützung zu bekommen. Nach wie vor befinden sich solche Codes ausschließlich im Gedächtnis einer Person oder sind bestenfalls auf irgendwelchen Zetteln, die - mehr oder weniger vor Missbrauch geschützt - aufbewahrt werden.

Im Umfeld der Finanztransaktionen, insbesondere jener, bei denen webbasierte Systeme involviert sind, hat sich eine Drittpartei etabliert: die Clearingstelle, eine Komponente im Bezahlverfahren, die den Zahlungsfluss vom Käufer zum Verkäufer sicherstellt. Die in diesem Zusammenhang bedeutsamen Merkmale der Clearingstelle:
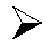 Verschiedene Systeme und Verfahren für Finanztransaktionen werden vom EDV-System der Clearingstelle unterstützt, wie zum Beispiel: Bankkonten (die Verfahren Sofortüberweisung oder Bankeinzug), Kreditkarten, etc. 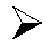
Jeder Verkäufer kann sein eigenes Verkaufssystem (über eine definierte Schnittstelle) an eine Clearingstelle anbinden - das Abwicklungsverfahren des Zahlungsflusses wird dadurch vom eigentlichen Verkaufssystem an eine Drittpartei ausgelagert.
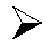 Weder der Verkäufer noch die Clearingstelle kennt alle Bezahlmöglichkeiten des Käufers - allein der Käufer verwaltet seine Bezahlmöglichkeiten, er fügt welche hinzu oder entfernt welche, ohne dass eine der beiden erstgenannten EDV-Systeme Kenntnis davon haben. Erst im Laufe eines Bezahlverfahrens wählt der Benutzer aus seinem aktuellen Pool eine Variante aus, die gerade zu diesem Zeitpunkt die gewünschte Transaktion ermöglicht. Alle anderen Varianten eines Käufers werden vom EDV-System der Clearingstelle weder gesehen noch überprüft, da diese Transaktionen anonym durchgeführt werden.

### 3.Aufgabe der Erfindung

Die Aufgabe der vorliegenden Erfindung besteht darin, ein Verfahren sowie ein dafür konzipiertes EDV-System zu beschreiben, welche die für den Menschen in seiner Fülle und Wesensart schwer zu merkenden Codes wie beispielsweise Freischalt-, Anmelde- oder Zugangscodes für EDV-Systeme oder anderer Daten wie beispielsweise Passbilder, zu abstrahieren und unter ausschließlicher Zuhilfenahme von Gegenständen des täglichen Gebrauchs für EDV-Systeme oder auch menschenlesbar abrufbar machen.

### 4.Lösung der gestellten Aufgaben

Die Aufgabe wird dadurch gelöst, dass sowohl ein Verfahren zur Abstraktion von spezifischen Daten unter ausschließlicher Zuhilfenahme von Gegenständen des täglichen Gebrauchs definiert wird, als auch ein EDV-System definiert wird, welches erfindungsgemäße Lesestationen besitzt, die die gelesenen Merkmale von Personen oder Gegenständen des täglichen Gebrauchs an einen erfindungsgemäßen Systemkern EDV-technisch übermittelt, welcher die zu abstrahierenden Daten und die Merkmale von Gegenständen des täglichen Gebrauchs speichert und verwaltet und diese zu abstrahierenden Daten anderen EDV-Systemen zur Verfügung stellt, und den Benutzern des erfindungsgemäßen EDV-Systems eine Benutzeroberfläche zur Verwaltung aller Daten und Regeln zu deren Verwendung, die im Systemkern verwaltet werden, anbietet.

Dazu ist es auch erforderlich, Daten zu Personen oder Personengruppen zu verwalten und sicherzustellen, dass nur jene Daten verfügbar sind, die einem Systemzugang (*Account*) untergeordnet sind.

Als Merkmale dienen alle EDV-technisch erfassbaren Größen eines Gegenstandes, des Erfassungspunktes oder einer Person, wie beispielsweise
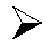 systemimmanente IDs von Gegenständen wie beispielsweise die Seriennummer eines Mobiltelefons,
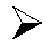 EDV-technisch erzeugte Muster, dargestellt auf einem Bildschirm (beispielsweise einer Smartwatch), wie beispielsweise QR-Codes oder aber auch ein bestimmtes Bild,
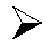 nur für diesen Zweck ein- oder angebrachte Codes wie beispielsweise RFID-Tags oder QR-Codes, die in Kleidungsstücken, Schmuckstücken oder anderen Alltagsgegenständen integriert sind,
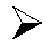 Körpermerkmale einer Person wie beispielsweise ein Fingerprint, die Stimme, die Größe
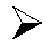 Definierte Bewegungen von Gegenständen oder Körper (Körperteilen), um daraus eine Geste abzuleiten,
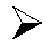 Beschleunigungsmuster: ein besonders mächtiges Merkmal, da nur der Benutzer die signifikante Sequenz kennt und beliebige andere Muster davor bzw. danach einbauen kann, um so die signifikante Sequenz zu verschleiern. Beispielsweise könnte die signifikante Sequenz die Bewegung in Form eines definierten Winkelbereichs sein (beispielsweise zwischen 30° und 60°), alle anderen Bewegungsmuster sind ohne Bedeutung; oder: sobald die Bewegungsform zwei Seiten eines Quadranten beschreibt, dürfen alle weiteren Bewegungen diesen Quadranten nicht verlassen.
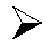 das Gewicht eines Gegenstandes oder das Ausüben eines zuvor definierten Drucks auf eine Waage, optional für eine definierte Zeitspanne,
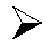 Geokoordinaten des Erfassungspunktes,
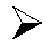 Datum / Uhrzeit der Erfassung.

Ein und dieselben Merkmale können und sollten auch zur Identifikation in unterschiedlichen EDV-Systemen verwendet werden, optional in unterschiedlichen Kombinationen oder Reihenfolgen.

Die verwendeten Gegenstände können optional so modifiziert sein, dass dies äußerlich kaum erkennbar ist sowie die Funktionalität dadurch nicht beeinträchtigt wird (beispielsweise Anbringen oder Einbau eines RFID-Tags oder Gravur eines QR-Codes).

### 4.1. Verfahren

Um mithilfe von Gegenständen des täglichen Gebrauchs abstrahierte Daten im erfindungsgemäßen EDV-System aktivieren zu können, bedarf es folgender Vorbereitungen:
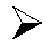 Anlegen eines Benutzer-Accounts im erfindungsgemäßen EDV-System, innerhalb dessen die erfassten Daten dieses Accounts verfügbar sind.
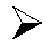 Anlegen eines Datensatzes, der
   - die Freischalt-, Anmelde- oder Zugangscodes des zu benutzenden EDV-Systems sowie eine menschenlesbare Identifikation des EDV-Systems selbst enthält, oder
   - die menschenlesbaren Daten wie beispielsweise Passbilder enthält, die abgerufen und dargestellt werden, oder
   - jene Daten eines EDV-Systems aufnehmen soll, die von diesem generiert werden, wie beispielsweise Eintrittskarten.
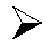 Anlegen von Datensätzen, die Merkmale jener Gegenstände des täglichen Gebrauchs enthalten, die zur Identifikation der zu abstrahierenden Daten benutzt werden sollen.
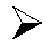 Zusammenstellung der Merkmale, durch die die zu abstrahierenden Daten zur weiteren Verarbeitung zur Verfügung gestellt werden sollen. Zumindest ein Merkmal ist zu definieren, optional können es mehrere Merkmale sein, die selbst konjunktiv oder disjunktiv miteinander verknüpft sind oder einer definierten Reihenfolge genügen müssen.

Dieser Zusammenstellung sind vielfältige Überlegungen zugrunde zu legen; die folgenden Fragen sind dabei zu beachten:
- Anzahl der Merkmale - wie viele sind unbedingt nötig, um die erforderliche Sicherheit zu gewährleisten? Beispielsweise ist ein Mobiltelefon ein sehr individueller Gegenstand, weist jedoch eindeutige als auch leicht kopierbare Merkmale auf. Je nach definiertem Merkmal sowie der Bedeutsamkeit der zu abstrahierenden Daten sind weitere Gegenstände einzubeziehen.
- Auswahl / Kombination der Merkmale: dies ist wohl der Hauptaspekt hinsichtlich Benutzerfreundlichkeit des Verfahrens. Dabei ist zu überlegen, in **welcher Situation** das Einlesen der Merkmale vonstattengeht - handelt es sich um eine Zutrittskontrolle, bei der man "unterwegs" ist (was ist griffbereit?), oder sitzt man an einem Schreibtisch und hat sich für die tägliche Büroarbeit eingerichtet?
Weiters ist zu überlegen, welche **Gegenstände** in der jeweiligen Situation üblicherweise **griffbereit** sind - hier gilt es zu definieren, welche Merkmale alternativ verfügbar sind und welche immer dabei sein sollten (beispielsweise kann eine Geste fast immer eingesetzt werden, das eigene Mobiltelefon ist meist griffbereit, die Geldbörse oder ein Mitarbeiterausweis kann leichter vergessen werden oder ist nicht so schnell griffbereit). Entsprechend werden die Merkmale kombiniert.
Optional wird auch die **Reihenfolge der Merkmale** definiert, optional werden Merkmale abhängig von anderen definierbaren Größen definiert, beispielsweise vom Wochentag der Erfassung. Optional werden über die verwendeten Merkmale implizit auch Zusatzinformationen verschlüsselt, die von einem Beobachter nicht bemerkt werden können. Beispielsweise könnte eine andere Reihenfolge als die übliche jene Bedeutung haben, dass die Benutzung nicht aus freiem Willen erfolgt und dadurch könnte ein verdeckter Alarm ausgelöst werden.

Das Verfahren startet entweder durch die Erfassung gespeicherter Merkmale über eine erfindungsgemäße Lesestation oder durch eine Anfrage eines freizuschaltenden EDV-Systems. In beiden Fällen reagiert nach dem Lesen der Merkmale, der Überprüfung auf Korrektheit im erfindungsgemäßen Systemkern und Übermittlung der Zugangs- oder Freischaltcodes an das anfragende beziehungsweise zu aktivierende EDV-System im Falle der Korrektheit der Merkmale das freizuschaltende EDV-System exakt gleich, als wären die Codes direkt über den herkömmlichen Vorgang eingegeben worden. Ergibt die Überprüfung, dass die gelesenen Merkmale nicht den definierten Werten entsprechen, wird eine entsprechende Fehlerbehandlung ausgeführt.

### 4.2. EDV-System

Das erfindungsgemäße EDV-System besteht aus einem **Systemkern**, jener Komponente, die die Funktionalität zur Speicherung der Accounts, personenbezogenen Daten, Personen und Gegenstände mit deren Merkmalen sowie den zu abstrahierenden Codes für anfragende EDV-Systeme sowie deren EDV-technischer Erreichbarkeit implementiert, sowie Schnittstellen für anfragende EDV-Systeme und Bedienoberflächen zur Verfügung stellt, um die Daten darstellen und bearbeiten zu können. Details des Systemaufbaus entsprechen dem üblichen Stand der Technik, vorzugsweise ist die Ausführung des Systemkerns als Web-Service auf einem Hochsicherheitssystem umgesetzt, der über sichere Datenverbindungen mit erfindungsgemäßen Lesestationen sowie mit anfragenden EDV-Systemen verbunden ist. Daten sind gemäß dem Stand der Technik in verschlüsselter Form im erfindungsgemäßen Systemkern gespeichert. Optional ist das erfindungsgemäße EDV-System auch für einen nach Außen hin abgeschlossenen Bereich (beispielsweise innerhalb eines Konzerns) konfigurierbar.

Der **Administrator-Zugang** implementiert eine Bedienoberfläche, über die ein Administrator für EDV-Systeme, die ein Interesse an der Verwaltungsfunktionalität des erfindungsgemäßen EDV-Systems haben, einen Datensatz mit den Zugangscodes für das anfragende EDV-System anlegt. Der Benutzer verknüpft zu diesem Datensatz die von ihm gewünschten Merkmale der zu benutzenden Gegenstände, damit beim nächsten Zugangs- oder Anmeldevorgang anstelle der Zugangscodes die nun verknüpften Merkmale der erfassten Gegenstände von einer erfindungsgemäßen Lesestation gelesen, im erfindungsgemäßen Systemkern verifiziert und durch Übermittlung der definierten Codes an das anfragende EDV-System auf diesem Wege den Benutzer freischalten / anmelden. In manchen Anwendungsfällen ist es nicht erwünscht, dass über diesen Zugang auch Benutzerdaten sichtbar sind (beispielsweise darf der Administrator für Zugangskontrollen keinen Einblick in die Daten der Benutzer haben - lediglich der Datensatz mit dem Zugangscode für das interne Zugangskontrollsystem ist über diese Rolle sichtbar), weshalb ein Rechte- / Rollenkonzept implementiert ist, welches selbst mit Hilfe des erfindungsgemäßen Verfahrens über Merkmale abstrahiert ist. Auch die Verschlüsselungscodes für die Daten im erfindungsgemäßen Systemkern sind über das erfindungsgemäße Verfahren abstrahiert.

Der **Benutzer-Zugang** implementiert eine Bedienoberfläche, über die ein Benutzer seine persönlichen Daten, Gegenstände und deren Merkmale verwalten und mit angelegten Datensätzen für die zu abstrahierenden Daten verknüpft. Neben üblichen personenbezogenen Daten wie Namen und Adresse können weitere Daten aufgenommen und abgerufen werden, optional auch mit einer Merkmalkombination verknüpft, die nach Möglichkeit vom erfassenden Gerät dargestellt werden, oder optional über andere vordefinierte Kanäle wie beispielsweise ein Mobiltelefon dargestellt werden. Beispiele dafür sind in Anspruch 8 genannt.

Diese beiden getrennt beschriebenen Zugänge können als voneinander unabhängige Software-Komponenten implementiert sein. Da der Benutzer manchmal selbst die Rolle des Administrators einnimmt (beispielsweise zum Anlegen der Zugangscodes zum eigenen Web-Mail-Account), kann der Benutzer-Zugang auch mit der Funktionalität des Administrator-Zugangs ausgestattet sein. Die technische Umsetzung beider Zugangstypen ist gemäß dem Stand der Technik entsprechend ausgeführt (beispielsweise als Web-Applikation oder als App auf einem Smartphone).

**Lese-Stationen** im erfindungsgemäßen EDV-System sind Geräte, über die Merkmale von im erfindungsgemäßen Systemkern erfassten Gegenständen EDV-technisch erfasst und an den Systemkern übermittelt werden. Je nach zu erfassendem Merkmal handelt es sich dabei um RFID-Reader, Kameras oder andere geeignete Geräte, die von einer geeigneten Software-Komponente gesteuert werden, welche die Daten an den erfindungsgemäßen Systemkern - optional über mobile Datenverbindungen - übermittelt. Die Ausführung der Implementierung entspricht dem üblichen Stand der Technik für das jeweils verwendete Gerät, optional ergänzt um ein Gerät mit der Eigenschaft, die gelesenen Daten an den erfindungsgemäßen Systemkern übermitteln zu können (beispielsweise ein Raspberry Pi).

Die erfindungsgemäßen Komponenten können als unabhängige, modulare Einheiten miteinander über definierte Schnittstellen kommunizieren, aber auch in anderen Architekturvarianten, wie in den Ansprüchen 2 bis 5 genannt, strukturiert sein.

Beispielsweise kann ein Betriebssystem eines Smartphones den erfindungsgemäßen Systemkern implementieren, der die Verwaltung der zu benutzenden Gegenstände, deren Merkmale sowie Anmelde- und Zugangscodes enthält. Das Betriebssystem selbst kann auch die Rolle des anfragenden EDV-Systems einnehmen, wenn sich ein Benutzer am Smartphone anmelden möchte. Darüber hinaus kann es auch als erfindungsgemäßes Lesegerät verwendet werden, um beispielsweise den Fingerabdruck und optional eine Geste am Touchscreen einzulesen, diese im integrierten Systemkern zu überprüfen und bei erfolgreicher Verifikation damit einen Benutzer am Smartphone anzumelden.

Darüber hinaus sind die erfindungsgemäßen Systemkerne so konzipiert, dass Daten einer Person in mehreren Systemkernen autark implementiert, diese aber auch gleichberechtigt oder hierarchisch strukturiert miteinander EDV-technisch verbunden sein und Daten abgleichen können.

### 5.Effekte der Erfindung und Unteransprüche

Die ausgeführte Lösung beschreibt ein Verfahren sowie ein dafür konzipiertes EDV-System, welche die für den Menschen in seiner Fülle und Wesensart schwer zu merkenden Codes wie beispielsweise Freischalt-, Anmelde- oder Zugangscodes für EDV-Systeme oder anderer Daten wie beispielsweise Passbilder, abstrahieren und unter ausschließlicher Zuhilfenahme von Gegenständen des täglichen Gebrauchs für EDV-Systeme oder auch menschenlesbar abrufbar machen. Dadurch wird der Benutzer des erfindungsgemäßen Verfahrens davon befreit, für jedes Datenverarbeitungssystem die passenden Codes in Form von Zeichenkombinationen, RFID-Cards, etc. parat zu haben. Stattdessen kommen Gegenstände des Alltags zum Einsatz, die der Benutzer ohnehin bei sich trägt.

Das bedeutet, dass Personen beispielsweise für jedes System mit Benutzeridentifizierung weder komplizierte Zeichenkombinationen merken noch eintippen müssen, um die jeweiligen Anmeldevorgänge durchzuführen. Stattdessen ist nur mehr erforderlich, Gegenstände, die ohnehin griffbereit sind, dem Lesegerät zum Lesen verfügbar zu machen.

Beispielsweise musste bisher ein ausschließlich zum Zwecke der Zugangskontrolle gefertigter Ausweis mitgenommen, verwahrt und im Bedarfsfall dem Lesegerät vorgehalten werden. Die erfindungsgemäße Lösung lässt es zu, dass mehrere RFIDs alternativ gültig sind, da sie beispielsweise in Kleidungsstücken eingebaut sind. Ergänzend könnte die Körpergröße (erfasst über eine Videokamera) in Kombination mit einem der vordefinierten RFID's in den Kleidungsstücken die Zutrittskontrolle übernehmen. Die Zutrittssicherheit wird mit dem erfindungsgemäßen Verfahren durch die Kombination mehrerer Merkmale erhöht und gleichzeitig wird eine Vereinfachung für Zutrittsberechtigte erreicht.

Anmeldeverfahren über Benutzername-, Passwortkombinationen für die unterschiedlichsten Anwendungen finden so einen Entwicklungssprung, da das erfindungsgemäße Verfahren vollkommen unabhängig von EDV-Anwendungen sowie Betriebssystemen implementiert ist. Für jedes EDV-System verwendbar, plattformübergreifend, für den Benutzer übersichtlich dargestellt sowie in der Benutzung selbst wesentlich flexibler, vereinfacht ein immer wieder für Ärger sorgender Schritt im Umgang mit EDV-Systemen das erfindungsgemäße Verfahren dieses Thema.

Eine häufige Kombination ist die E-Mail-Adresse zusammen mit einem für das jeweilige EDV-System gültigen Passwort. Mit dem erfindungsgemäßen Verfahren kann beispielsweise das Smartphone als Lesestation (4) sowie ein Merkmal des Smartphones selbst (beispielsweise die Seriennummer) zusammen mit einer für das anfragende oder aufzurufende EDV-System spezifischen Geste (beispielsweise eine Bewegung mit dem Smartphone, um ein bestimmtes Beschleunigungsmuster aufzuzeichnen), nach erfolgreicher Verifikation diesem die spezifizierte Benutzername- Passwortkombination übermittelt werden.

In einer Ausführungsform kann die Erfindung dadurch gekennzeichnet sein, dass unterschiedliche Sicherheitsstufen definiert werden, die sich beispielsweise auf die Anzahl oder die Reihenfolge der Merkmale beziehen.

In einer Ausführungsform kann die Erfindung dadurch gekennzeichnet sein, dass die Gültigkeit von Gegenständen und deren Merkmale zeitlich begrenzt wird.

In einer Ausführungsform kann die Erfindung dadurch gekennzeichnet sein, dass die Gültigkeit von Merkmalen an geographische Bereiche gebunden ist.

In einer Ausführungsform kann die Erfindung dadurch gekennzeichnet sein, dass bestimmte Gegenstände oder Merkmale hinsichtlich definierten Sicherheitsstufen oder Merkmalgruppen verpflichtend aufgenommen oder explizit ausgeschlossen werden.

In einer Ausführungsform kann die Erfindung dadurch gekennzeichnet sein, dass bestimmte Gegenstände oder Merkmale hinsichtlich definierten Sicherheitsstufen oder Merkmalgruppen in deren Schnittmenge enthalten sein müssen oder nicht enthalten sein dürfen.

In einer Ausführungsform kann die Erfindung dadurch gekennzeichnet sein, dass die Gruppierung von Merkmalen selbst bestimmten Verknüpfungsarten wie beispielsweise Konjunktion, Disjunktion oder einer definierten Reihung unterworfen sind.

In einer Ausführungsform kann die Erfindung dadurch gekennzeichnet sein, dass die im erfindungsgemäßen EDV-System gespeicherten personenbezogenen Daten (beispielsweise die Sozialversicherungsnummer) durch einen Lesevorgang von Merkmalen an ein Datensichtgerät (beispielsweise mittels SMS an ein Mobiltelefon oder an eine App am Smartphone) übertragen werden.

In einer Ausführungsform kann die Erfindung dadurch gekennzeichnet sein, dass personenbezogene Daten (beispielsweise eine digitale Eintrittskarte) über ein EDV-System an das erfindungsgemäße EDV-System zur Speicherung übertragen wird, um diese Daten durch Einlesen von Merkmalen abzurufen und an ein EDV-System wiederum zu übertragen. Optional können Daten im erfindungsgemäßen EDV-System auch gelöscht oder als ungültig markiert werden (wenn beispielsweise die Eintrittskarte gelöst wurde). Eine Möglichkeit der Implementierung sieht vor, dass das schreibende EDV-System über einen zuvor definierten Schlüssel (Applikations- und personenbezogen) in das erfindungsgemäße EDV-System schreibt, damit der Benutzer über die zuvor definierte Merkmalkombination darauf zugreifen kann.

In einer Ausführungsform kann die Erfindung dadurch gekennzeichnet sein, dass Daten für den elektronischen Zahlungsverkehr (beispielsweise kleinere Geldbeträge für Parkgebühren, oder Zugangscodes zu Bankkonten, um Überweisungen zu beauftragen) gespeichert werden. Eine Mediumübergreifende elektronische Brieftasche wird so über Merkmale freigeschalten, Online-Shops kann eine im erfindungsgemäßen EDV-System gespeicherter Zugangscode über eingelesene Merkmale freigegeben werden.

In einer Ausführungsform kann die Erfindung dadurch gekennzeichnet sein, dass Daten, die zur Benutzung von KFZ erforderlich sind, gespeichert werden. Insbesondere zur Öffnung der Türen sowie für den Startvorgang benötigte Daten werden beispielsweise über eine SmartWatch dem Fahrzeug übermittelt, ohne traditionelle Schlüssel verwenden zu müssen. Dies ist für private KFZ, aber auch für gemietete Transportmittel anwendbar.

In einer Ausführungsform kann die Erfindung dadurch gekennzeichnet sein, dass Kundennummern von Firmen im erfindungsgemäßen System verwaltet werden. Bei Einkäufen wird beispielsweise über die geographischen Koordinaten und dem Start der Lesestation-App am Smartphone die entsprechende Kundennummer abgerufen und anderen EDV-Systemen durch Merkmalkombinationen optional ohne oder mit minimaler Benutzerinteraktion zur Verfügung gestellt. Das lästige Suchen von Kundenkarten in physischer Form oder innerhalb einer App entfällt dadurch.

### 6.Kurzbeschreibung der Zeichnungsfigur

Die Zeichnungsfigur auf Blatt 1 zeigt ein Blockdiagramm des Zusammenhangs der erforderlichen Komponenten des erfindungsgemäßen EDV-Systems.

Das Interaktionsdiagramm auf Blatt 2 zeigt den beispielhaften Ablauf, wenn der Benutzer über eine Lesestation das erfindungsgemäße Verfahren startet. Das Interaktionsdiagramm auf Blatt 3 zeigt den beispielhaften Ablauf, wenn der Benutzer über ein EDV-System das erfindungsgemäße Verfahren startet.

### 7.Figurenbeschreibung

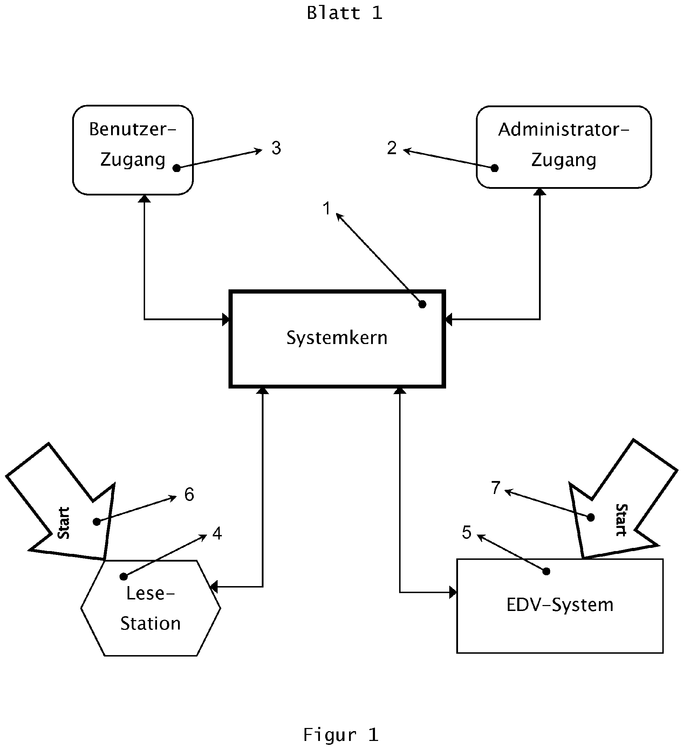

Im Blockdiagramm der **Figur 1** steht der Systemkern 1 im Zentrum, der sämtliche Daten speichert und die Funktionalität der Validierung von Merkmalen enthält sowie mit einer Administrator-Zugangs- 2 und einer Benutzer-Zugangskomponente 3 über eine Datenverbindung in bidirektionaler, EDV-technischer Verbindung steht. Die technische Umsetzung dieser Verbindung ist entsprechend den Technologien der jeweils verwendeten Komponenten gemäß dem Stand der Technik ausgeführt.

Startet das Verfahren über Start 6, aktiviert die Lese-Station 4 den erfindungsgemäßen Systemkern 1, der aufgrund der gelesenen und verifizierten Merkmale und optional für das mit der Lesestation verknüpfte EDV-System 5 die definierten Zugangscodes ermittelt und dieses damit aufruft, wodurch die weiteren Aktionen des aufgerufenen EDV-Systems 5 ausgeführt werden.

Startet das Verfahren über Start 7, aktiviert ein EDV-System 5 den erfindungsgemäßen Systemkern 1, der von der Lese-Station 4 die Funktion des Einlesens der definierten Merkmale aufruft. Nach dem Lesen der Merkmale über die Lese-Station 4 erfolgt der weitere Ablauf entsprechend der zuvor beschriebenen Abfolge (Start 6).

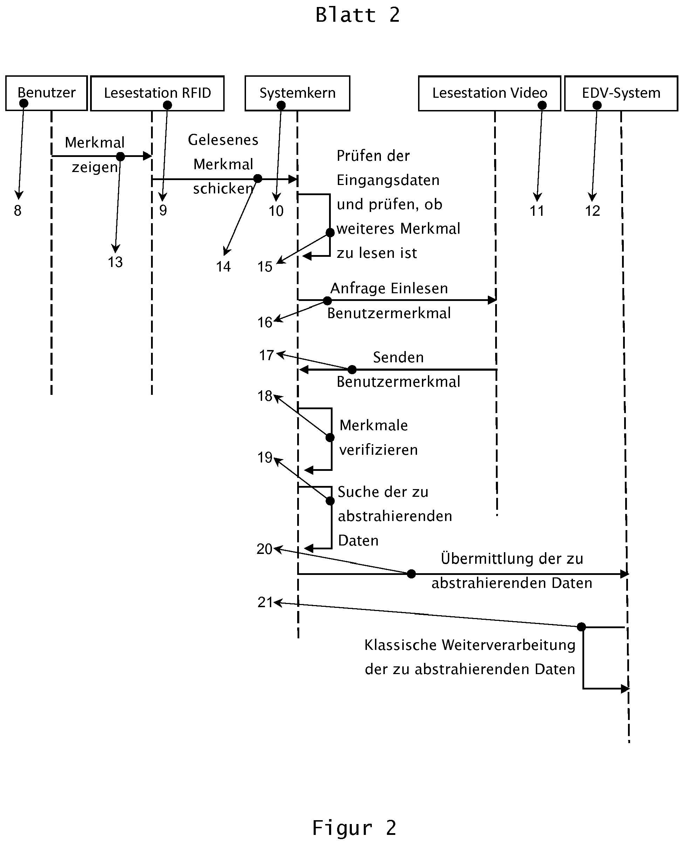

Das Ablaufdiagramm von **Figur 2** zeigt die Interaktionsobjekte Benutzer 8, Systemkern 10, EDV-System 12 sowie die beiden Lesestationen für RFID 9 und Video 11. Nachdem ein Benutzer einen RFID-Tag zum Lesen an die Lesestation RFID 9 hält 13, sendet 14 die Lesestation 9 das gelesene Merkmal samt einer Identifikationsnummer an den Systemkern 10. Dieser überprüft die Eingangsdaten 15 und erkennt, dass ein weiteres Merkmal mit diesem Datensatz verknüpft ist. Eine Anfrage zum Einlesen eines weiteren Merkmals 16 erfolgt an die Lesestation Video 11, welche das gelesene Merkmal retourniert 17. Der Systemkern 10 überprüft die gelesenen Merkmale 18, sucht die zu diesen Merkmalen verknüpften abstrahierten Daten 19 inclusive einer EDV-technischen Adresse, an die die abstrahierten Daten geschickt werden sollen, und übermittelt diese 20 an das EDV-System 12. Dieses wiederum verarbeitet die übermittelten Daten 21 in der Form, als wären sie direkt in das EDV-System 12 eingegeben worden.

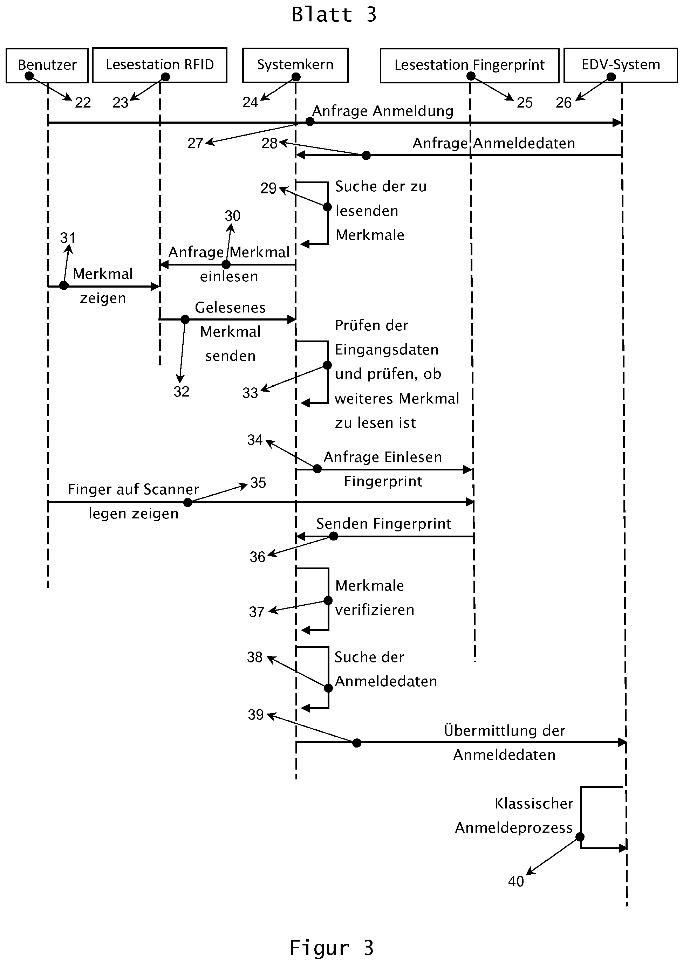

Das Ablaufdiagramm von **Figur 3** zeigt die Interaktionsobjekte Benutzer 22, Systemkern 24, EDV-System 26 sowie die beiden Lesestationen für RFID 23 und Fingerprint 25. In diesem Szenario stellt der Benutzer 22 eine Anfrage zur Anmeldung 27 an ein EDV-System 26, welche diese Anfrage um Anmeldedaten 28 an den Systemkern 24 weiterleitet. Dieser sucht aufgrund der Kennung des EDV-Systems 26 nach damit verknüpften Merkmalen, die wiederum über definierte Lesestationen abgefragt werden. Im dargestellten Szenario wird an eine bestimmte RFID Lesestation 23 die Anfrage nach diesem Merkmal gestellt, die Lesestation 23 signalisiert dem Benutzer 22, dass das Merkmal gelesen werden soll und nachdem es gelesen werden konnte 31, sendet 32 die Lesestation 23 das Merkmal an den Systemkern 24. Dieser überprüft die Eingangsdaten 33 und erkennt, dass ein weiteres Merkmal mit diesem Datensatz verknüpft ist. Eine Anfrage zum Einlesen eines weiteren Merkmals 34 erfolgt an die Lesestation Fingerprint 25, welche das vom Benutzer 22 gelesene Merkmal 35 retourniert 36. Der Systemkern 24 überprüft die gelesenen Merkmale 37, sucht die zu diesen Merkmalen verknüpften abstrahierten Daten 38 inclusive einer EDV-technischen Adresse, an die die abstrahierten Daten geschickt werden sollen, und übermittelt diese 39 an das EDV-System 26. Dieses wiederum verarbeitet die übermittelten Anmeldedaten 40 in der Form, als wären sie direkt in das EDV-System 26 eingegeben worden.

## Patentansprüche

1. Verfahren sowie ein dafür konzipiertes EDV-System um spezifische Daten unter ausschließlicher Zuhilfenahme von Gegenständen des täglichen Gebrauchs zu abstrahieren, **gekennzeichnet durch**
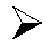 die Abstraktion spezifischer Daten in Form einer Zuordnung solcher Daten zu Merkmalen von Personen, Gegenständen oder deren Bewegungsmuster im Systemkern (1), die mittels Lesevorgänge solcher Merkmale an Lesestationen (4) im Systemkern (1) validiert und von diesem zur Weiterverarbeitung in EDV-Systemen (5) diesen zur Verfügung gestellt werden,
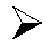 einen Systemkern (1) zur Speicherung von spezifischen Daten sowie Verknüpfung dieser Daten mit Merkmalen von Personen, Gegenständen oder deren Bewegungsmuster, wobei solche Verknüpfungen optional auf marktübliche EDV-Systeme (5) bezogen sein können,
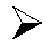 Lesestationen (4) zum EDV-mäßigen Erfassen unterschiedlicher Merkmale von Personen, Gegenständen oder deren Bewegungsmuster, die solche gelesenen Merkmale an den Systemkern (1) EDV-technisch übermitteln, sowie optional
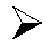 eine EDV-technische Schnittstelle für marktübliche EDV-Systeme (5), um Daten mit dem Systemkern (1) auszutauschen.

2. EDV-System nach Anspruch 1, **dadurch gekennzeichnet, dass** der Datenaustausch zwischen einer erfindungsgemäßen Lesestation (4), dem Systemkern (1) und einem anfragenden EDV-System (5) über eine optional mobile Datenverbindung erfolgt.

3. EDV-System nach Anspruch 1, **dadurch gekennzeichnet, dass** der Systemkern (1) in einer Lesestation (4) integriert ist und der Datentransfer zu einem anfragenden EDV-System (5) über eine optional mobile Datenverbindung erfolgt.

4. EDV-System nach Anspruch 1, **dadurch gekennzeichnet, dass** der Systemkern (1) in ein anderes, üblicherweise anfragendes EDV-System (5) integriert ist und der Datenaustausch mit einer Lesestation (4) über eine optional mobile Datenverbindung erfolgt.

5. EDV-System nach Anspruch 1, **dadurch gekennzeichnet, dass** der Systemkern (1), ein anfragendes EDV-System (5) und eine Lesestation (4) miteinander integriert sind, ohne dass eine Datenverbindung zu anderen Systemen zwingend erforderlich ist, um die erfindungsgemäße Funktionalität anzubieten.

6. EDV-System nach den Ansprüchen 1 bis 5, **dadurch gekennzeichnet, dass** die erfindungsgemäßen Komponenten, wie sie in Figur 1 dargestellt sind, mehrfach vorhanden sind und optional untereinander EDV-technisch - optional über mobile Datenverbindungen - miteinander gleichberechtigt oder hierarchisch strukturiert verbunden sind.

7. EDV-System nach den Ansprüchen 1 bis 6, **dadurch gekennzeichnet, dass** zu jedem lesbaren Merkmal ein oder mehrere, optional sortierte Lesestationen (4) definiert sind, die wiederum optional mit anfragenden EDV-Systemen (5) verknüpft sind.

8. EDV-System nach den Ansprüchen 1 bis 7, **dadurch gekennzeichnet, dass** neben üblichen personenbezogenen Daten wie Namen und Adresse auch weitere personenbezogene Daten wie beispielsweise Führerschein-ID, Sozialversicherungsnummer, Reisepass-ID, Kontonummern, aber auch Bilddateien wie beispielsweise Passfotos oder Verweise zu Internetseiten, die beispielsweise auf einen Grundbuchsauszug eines zur Person gehörenden Grundstücks zeigen, verwaltet und über definierte Merkmale oder Merkmalgruppen miteinander verknüpft sind.

9. EDV-System nach den Ansprüchen 1 bis 8, **dadurch gekennzeichnet, dass** EDV-Systeme (5) Daten an den Systemkern (1) zur Speicherung senden, welche über definierte Merkmale oder Merkmalgruppen von EDV-Systemen (5) nach dem erfindungsgemäßen Verfahren verwendet werden können.
